# EUROPEAN PATENT SPECIFICATION

(11) **EP 1 480 541 B1**
(45) Date of publication and mention of the grant of the patent: **04.10.2006**
(21) Application number: 03815691.5
(22) Date of filing: 21.10.2003
(51) Int. Cl.: A47J 31/40

(54) **MACHINE FOR COFFEE BEVERAGE PRODUCTION**
MASCHINE ZUR KAFFEEGETRÄNKHERSTELLUNG
MACHINE DE PRODUCTION DE BOISSON AU CAFE

(30) Priority: 07.02.2003 IT MI20030219
(43) Date of publication of application: 01.12.2004
(73) Proprietor: DE' LONGHI S.p.A., 31100 Treviso (IT)
(72) Inventor: DE' LONGHI Giuseppe, I-31100 Treviso (IT)
(74) Representative: Rapisardi, Mariacristina
(86) International application number: PCT/EP2003/011643
(87) International publication number: WO 2004/069012

(56) References cited:
- EP-A- 0 937 432
- DE-A- 19 848 370
- US-A- 4 784 050
- US-A- 5 878 654

## Description

The present invention relates to a machine for producing a coffee beverage.

Traditional machines comprise a device to contain the coffee powder and the water supply device united in a single unit that also forms the coffee powder infusion chamber; moreover, said machines also include a dosing device for the coffee powder, a moving action mechanism, a boiler, etc.

In said machines, the container - supply device is removable, for example, for cleaning or maintenance purposes; in fact the container - supply device is the part that is most often soiled because it is always in contact with the coffee powder and because the infusion operation occurs inside this device.

However, washing of this device is extremely difficult, and in certain cases, can also be damaging for the machine.

In fact, it is very complicated to obtain access to the internal parts of the container - supply device, and this hinders the correct and complete cleaning operations, especially of the filter.

Moreover, since the container - supply device includes parts that are in relative motion, it is possible that the lubricant is removed, or that certain components are removed or displaced from their correct position during washing operations; the consequences are easy to imagine, both in terms of possible machine damage and in terms of unsatisfactory coffee quality.

A further problem with traditional machines concerns the fact that the machine will produce good quality coffee only when the intervals between one coffee production operation and the next are very short.

In the machine for the production of a coffee beverage (in particular domestic versions) that are used with average frequency, the time lapse between the preparation of one cup of coffee and the next is generally too long to guarantee that the internal machine parts, and in particular the water pipes, are still hot; and therefore the quality of the coffee produced by the machine is limited.

Therefore the technical task proposed by the present invention is to realise a machine to produce a coffee beverage that will eliminate the technical problems known in prior art.

Within the context of this technical task, one purpose of the invention is to realise a machine that can be washed easily and without the risk of damaging the components.

Another purpose of the invention is to realise a machine equipped with parts that are all easily accessible.

In particular, the internal portions of the component adapted to contain the coffee powder, always particularly exposed to soiling risk even when separated from the machine, are easily accessible according to this finding: this permits the maximum possibility of rapid complete cleaning operations, especially the filter component.

A further purpose of the invention is to realise a machine that can be washed without the accidental removal or displacement of consumer elements or parts such as the mechanism lubricant.

The technical task, as well as these and other purposes, according to the present invention are attained with the realisation of a machine for producing a coffee beverage according to the appended claims.

Further characteristics and advantages of this invention will be made clearer with the description of a preferred but not exclusive embodiment of the machine according to the finding, illustrated in an indicative but not limitative manner in the appended drawings wherein:

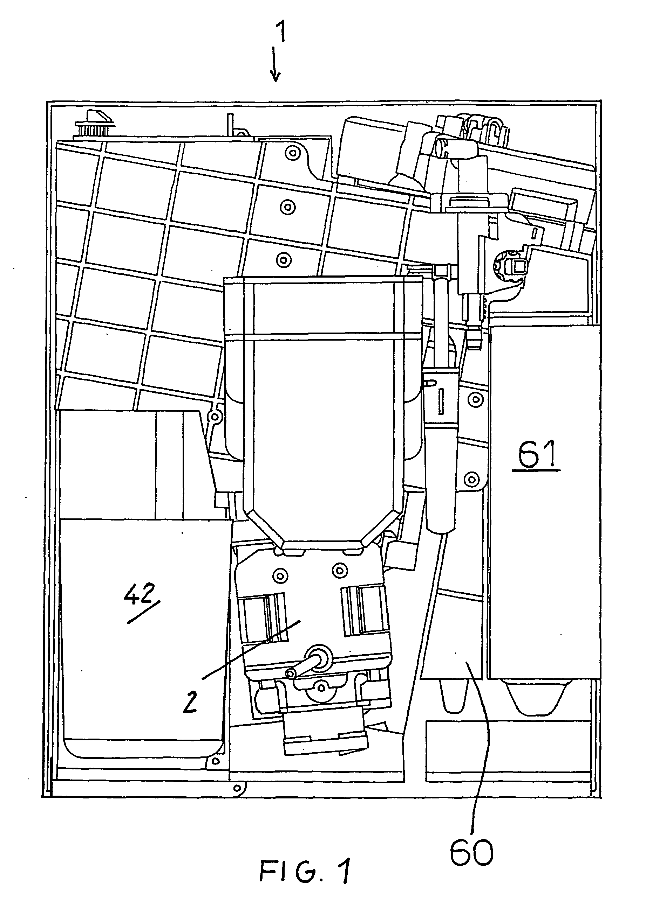

- figure 1 shows a schematic view of the machine according to the invention;

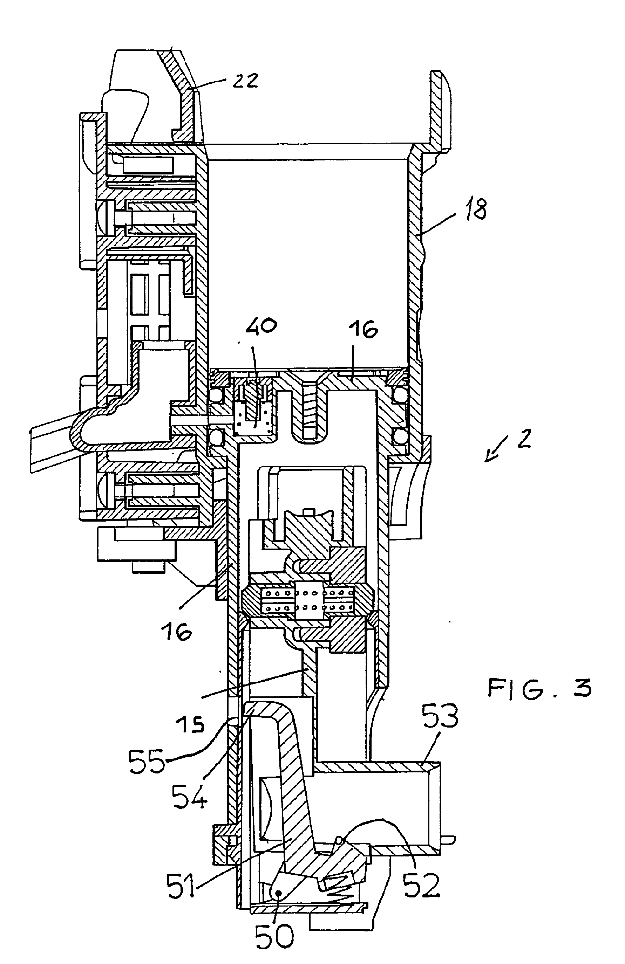

- figures 2 and 3 show a cross-section of the container device in two different configurations;

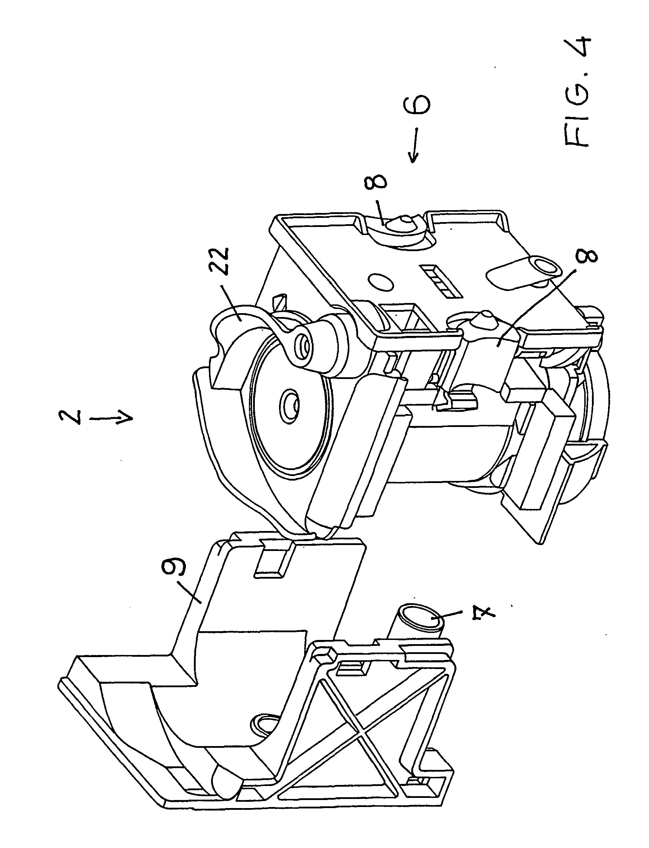

- figure 4 shows a view in perspective of the coffee powder container device;

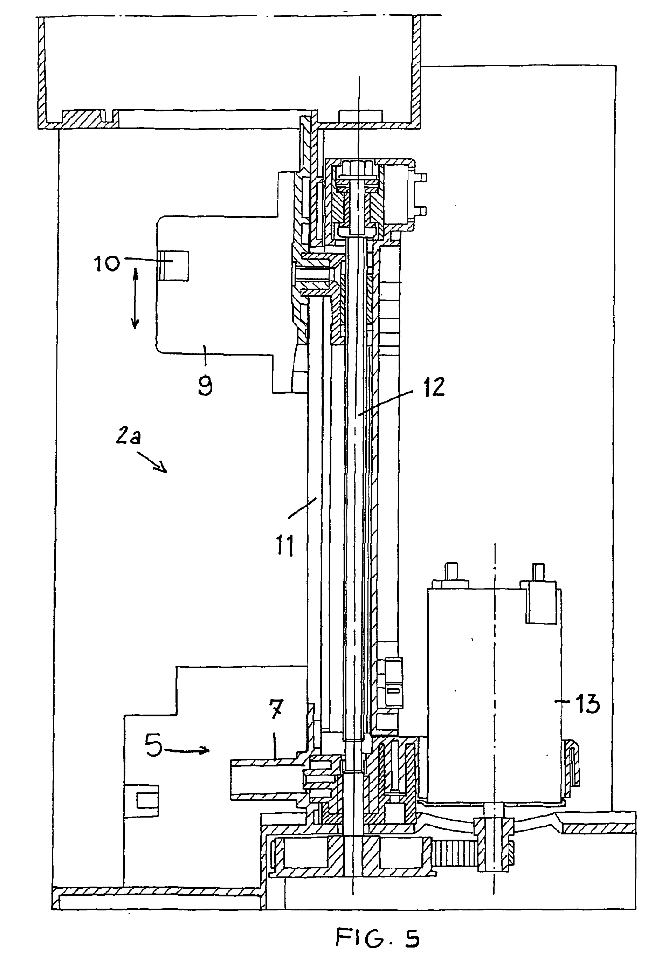

- figure 5 shows a lengthwise cross-section of a moving mechanism device according to this invention;
- figure 6 shows a schematic cross-section of a portion of the machine in an idle configuration, wherein it is possible to extract the coffee powder container device;
- figure 7 shows a schematic cross-section of a portion of the machine in a configuration during the coffee powder supply action;
- figure 8 shows a schematic cross-section of a portion of the machine during an operational stage;
- figure 9 shows a schematic cross-section of a portion of the machine in a configuration with the coffee container device connected to the fluid supply device so that it forms the infusion chamber;

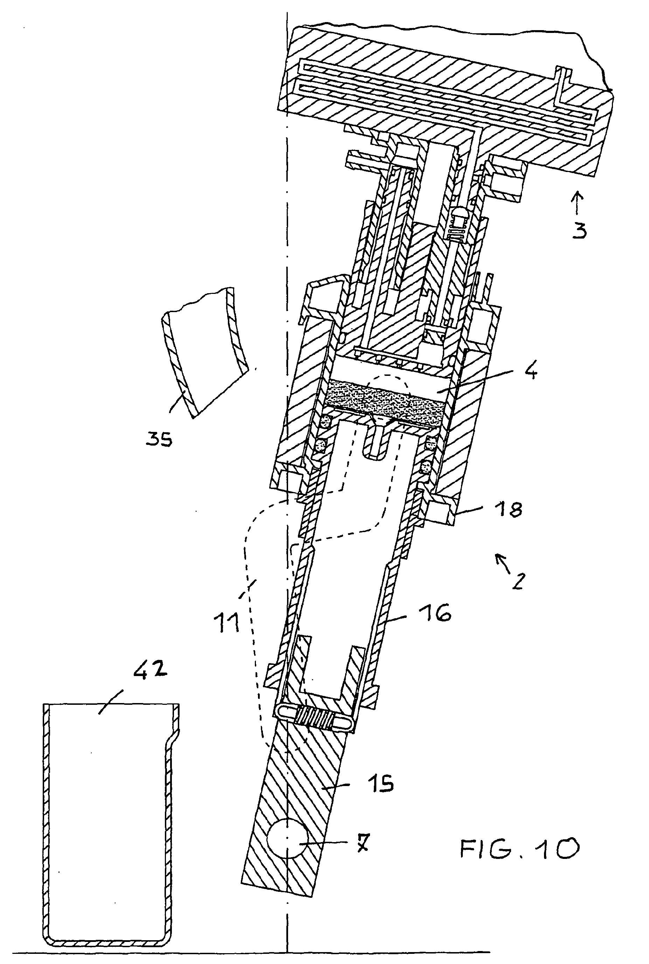

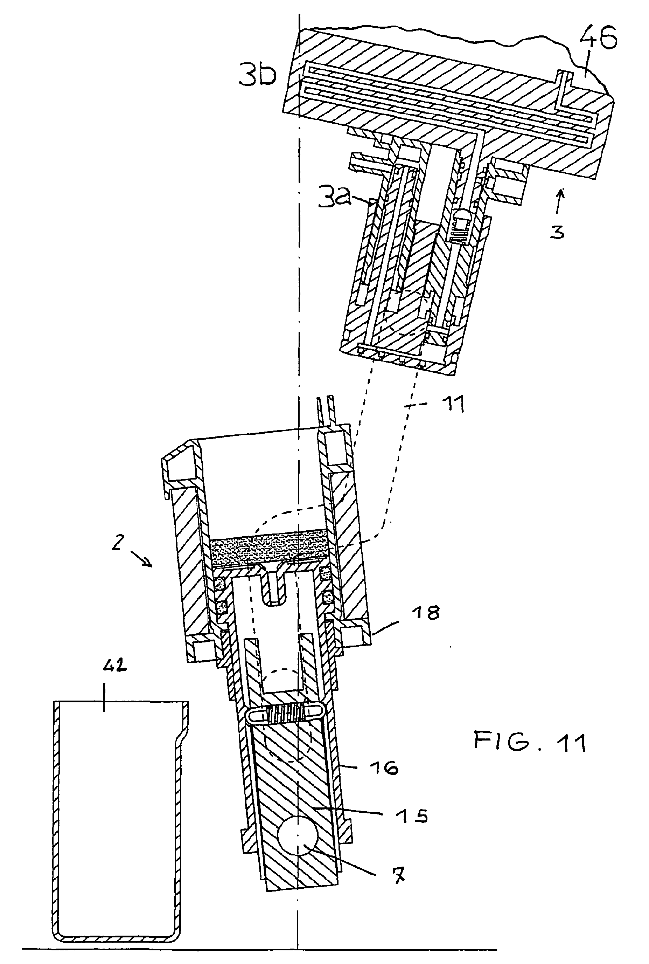

- figures 10, 11, and 12 show a schematic cross-section of a portion of the machine in configurations wherein the coffee powder container is successively positioned further away from the fluid supply device;
- figure 13 shows a schematic cross-section of a portion of the machine in a configuration wherein the waste coffee powder is expelled from the container device;
- figure 14 shows a schematic cross-section of a portion of the machine during a return stage in idle configuration after the expulsion of the waste coffee powder;
- Figures 15-18 show a schematic cross-section of a tap on the machine that delivers liquid or steam in four different function configurations;

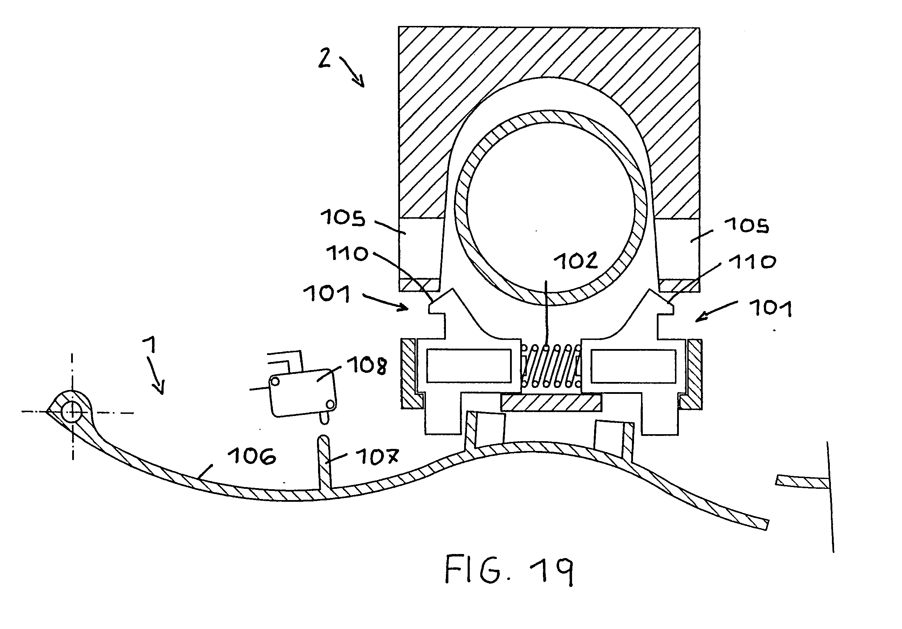

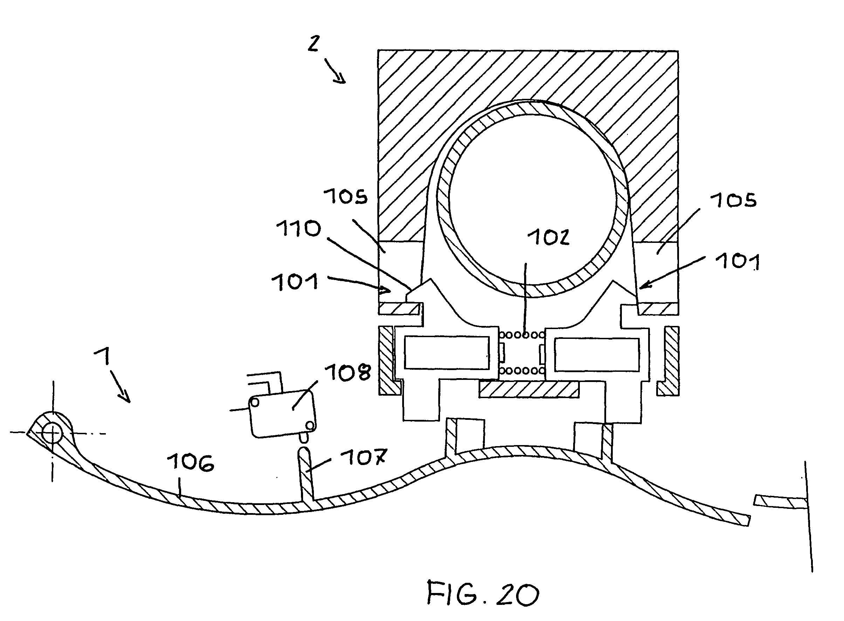

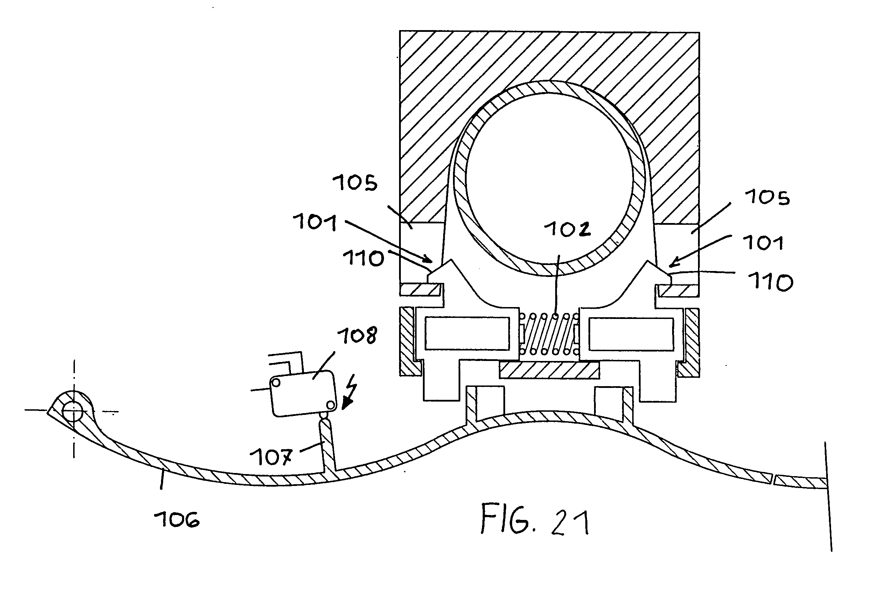

   Figures 19, 20, and 21 show a schematic section of a system for connecting the coffee container device to the machine. In particular, figure 19 illustrates the coffee container device separate from the machine, while figure 20 illustrates the coffee container incorrectly or only partially connected to the machine so that the micro-switches will not enable the machine to produce the coffee beverage, and lastly figure 21 illustrates the position of the coffee container device when it is connected to the machine correctly, so that the microswitch will transmit the consent to the machine to produce the coffee beverage.

In reference to the aforesaid figures, the machine for producing a coffee beverage is indicated throughout with the reference numeral 1.

The machine 1 comprises a coffee powder container device 2 and a fluid supply device 3 for producing the coffee beverage, where both devices are reciprocally mobile so that when they are connected together they form a coffee powder infusion chamber 4.

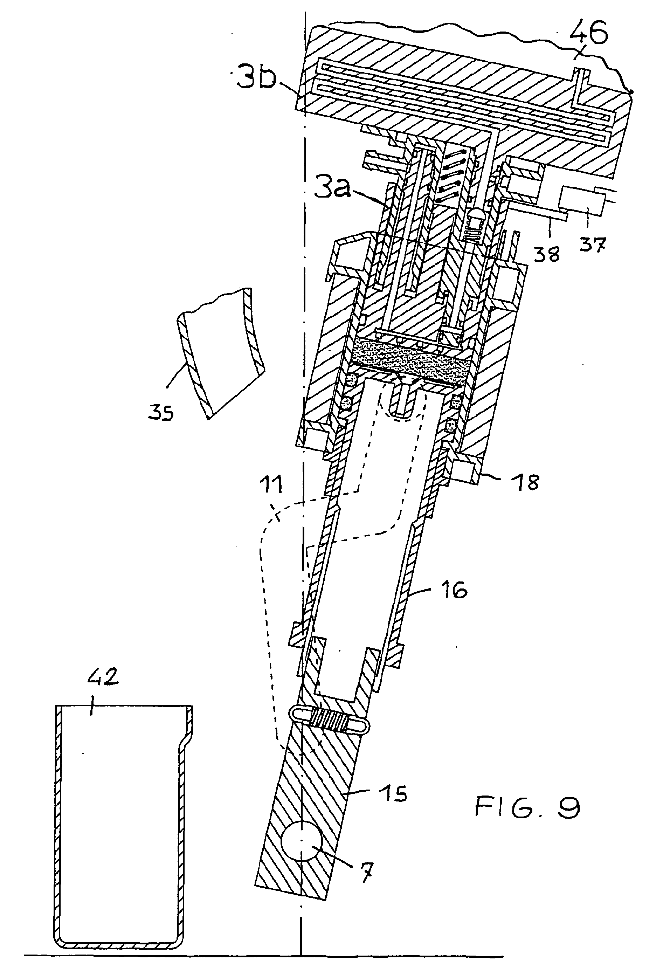

The supply device 3 is per se known and widely described in EP1367925 wherein is stated that it consists of a valve group suitable for supply water only when the piston moves towards the boiler (FIG.9), urged by the container device that presses the spring intended to suitable press the coffee powder, to open hydraulic circuits.

Advantageously, the container device 2 is removable from the machine 1, so that it can be separated.

In particular, as shown in the appended figures, the container device 2 is connected to a pivoting device 2a adapted to move the container device 2 from a position a certain distance from the supply device 3 to a position adherent to supply device 3.

The container device 2 presents first and second means of connection 5,6, to the pivoting device 2a, where the first means of connection 5 comprises at least one rotation pin 7 for container device 2 insertion, and the second means of connection 6, comprises couplings 8 for connection to a slide 9 of the pivoting device 2a which is mobile in relation to pin 7.

The figure shows that slide 9 presents seatings 10 for connection to couplings 8.

The rotation pin 7 is preferably fixed and positioned lower than slide 9.

Slide 9 is connected through a sliding action to a guide 11 which controls at least the angular motion of container device 2 around pin7; in addition, slide 9 is also connected through a sliding action to a driving action screw 12 that is rotated by an electric motor 13.

Basically motor 13 controls the rotating action of screw 12, and in cooperation with guide 11, said screw prevents slide 9 from rotating together with the screw, causing translation of the slide along the screw 12 and rotation of the container device 2 around the pin 7 controlled by the profile of the guide 11.

As shown in the appended figures the container device 2 comprises at least three telescopic elements 15, 16, 18 that are connected to each other in sliding mode.

A first telescopic element is set on the rotation pin 7, a second telescopic element 16 is connected by sliding on the first telescopic element, and a third telescopic element 18 is connected by sliding on the second telescopic element 16 and adapted to house at least one portion of the supply device 3 to form the infusion chamber 4.

Advantageously, the second telescopic element 16 presents first abutments 19 adapted to act with second elastic abutments 20 of the first telescopic element 15, where, during the extension stage of the container device 2, the first and second abutments 19, 20, are adapted to control the translation action firstly of the third telescopic element 18 in relation to the first and second telescopic elements 15, 16, and during the retraction stage of the container device, they are adapted to control the translation, firstly of the second and third telescopic elements 16, 18 in relation to the first telescopic element 15, and then the translation of the third telescopic element 18 in relation to the second telescopic element 16.

Moreover, the machine comprises a means of expulsion 22 for the waste coffee powder from the container device 2.

The means of expulsion comprises, for example, an expeller lever connected to a double helix with pinion controlled rotation action.

In this manner the expeller lever is continually guided during coffee powder expulsion, limiting the danger of the powder blocking the mechanism and preventing correct machine function.

Advantageously, according to the present invention, machine 1 comprises an expansion chamber, identified by reference numeral 60, that presents a flattened configuration having a basically truncated cone shape, interposed between a water tank 61 and the container and supply devices 2 and 3.

The coffee powder container device 2 that can be separated from machine 1, for example for washing purposes, presents a blocking element adapted to maintain all the organs that compose the unit in correct position.

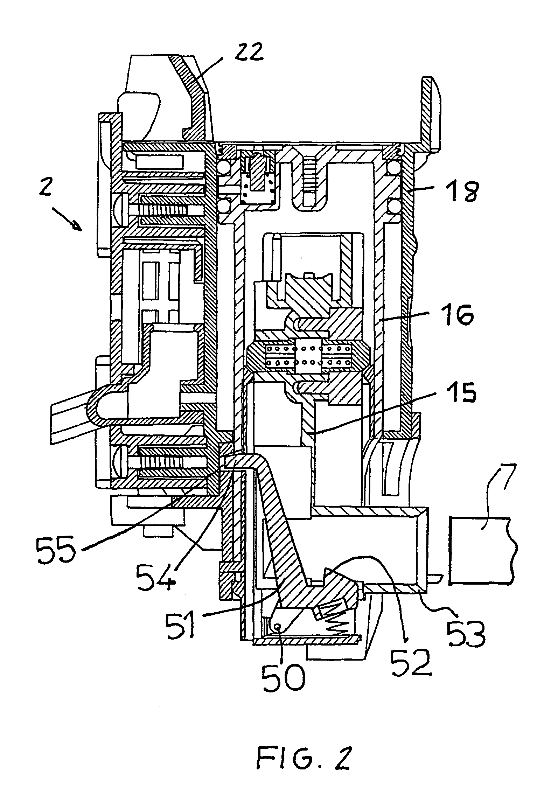

As is shown in particular in figure 2, the blocking element comprises a lever 51 hinged at point 50 to the first telescopic element 16; lever 51 presents a protruding portion 52 inside a tubular portion 53 adapted to house pin 7.

Lever 51 presents a right-angled end 54 that is inserted into the aligned holes 55 of the second and third telescopic elements 16, 18 to prevent said elements from extending when the device 2 is disconnected from the machine.

When device 2 is connected to the machine 1, the pin 7 rotates the lever 51 around the hinge 50 countering a spring action and causing the extraction of the end angle 54 from the aligned holes 55, permitting the extension of the tubular elements 15,16,18.
As shown in figures 19, 20, and 21, mobile hooking teeth 101 can be foreseen for reciprocal approach and outward motion by means of a spring 102, in order to connect the container device 2 to the machine 1.

When the container device 2 is connected in the optimal manner to machine 1, the teeth 101 are inserted correctly into the holes 105 permitting the correct closure of the hatch 106, and consequently through a pin 107 to trigger a microswitch 108 that provides the consent to machine 1 to produce the coffee beverage.

However after the elements have been disassembled, for example for washing purposes, if they are not re-assembled correctly by the user because the teeth 101 are partially, and/or incorrectly or not at all inserted in the holes 105, the hatch 106 will not close correctly because of the enlargement 110 of the teeth 101 and the pin 107 will not trigger the microswitch 108, thus preventing all machine function.

Advantageously, the machine according to this finding comprises a water or steam interception tap 25; in particular tap 25 is adapted to intercept the water or steam that exits from the machine, and is positioned upstream of the container and supply devices 2 and 3.

It is especially practical that when tap 25 is turned to one of its configurations, it is adapted to activate or deactivate one or more of the microswitches (not shown in the appended drawings for clarity) that control the switch-on or switch-off of the water supply pump to the boiler, and/or the switch-on or switch-off of the electric resistors/elements in the boiler.

Tap 25 presents a body 26 having at least a first and a second communicating space 27, 28, with the exterior, and is equipped with a piston connected internally in sliding mode.

Together with body 26, the piston 29 forms at least four chambers 30, 31, 32, 33, which can deliver water or steam alternatively.

Three chambers 30, 31, and 32 are formed by grooves realised on piston 29 and a fourth chamber 33 has a variable volume and is formed between the crown of the hollow body 26 and the crown of piston 29.

Advantageously, a first chamber 30 of the said four chambers is connected to a duct 30a that opens onto the crown of piston 29, a second chamber 31 is closed, a third chamber 32 is connected to a duct 32a that opens onto the exterior of tap 25, and the fourth chamber 33 is connected to the space 28 of the water or steam supply on exit from the machine.

Moreover, in a preferred embodiment, the first space 27, (used for access to water or steam inside the tap 25) is realised on a side portion of the body 26, and the second space 28 (used for water or steam discharge from tap 25) is realised on the crown of the hollow body 26.

The function of the machine for producing coffee beverages according to this invention is obvious from the descriptions and illustrations, and in particular, is basically composed as follows.

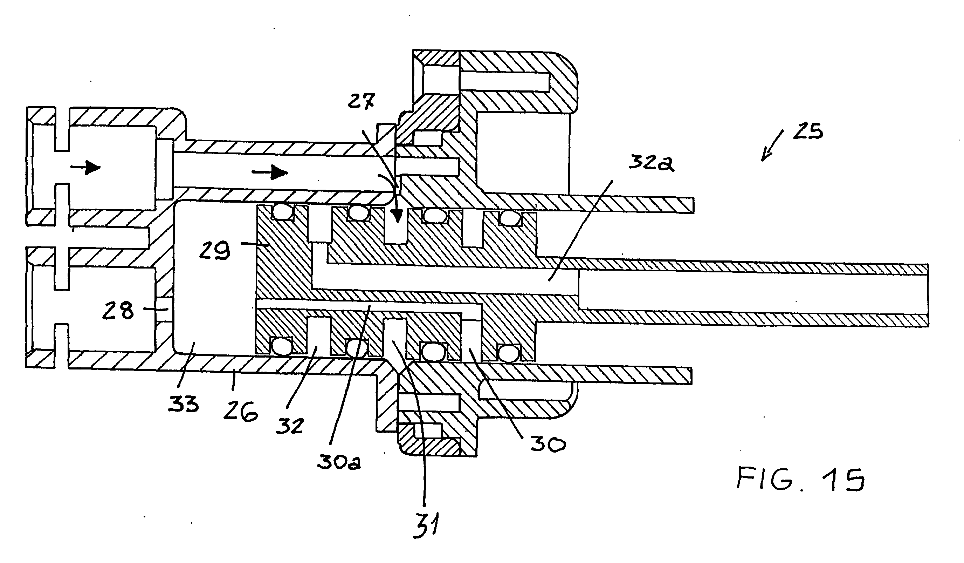

The tap 25 is initially positioned in the configuration shown in figure 15, with chamber 31 that is closed, in communication with fluid entry space 27; in this configuration the pumps and the boiler resistors/elements are deactivated; no fluid can enter the interior of the tap 25, and therefore exit from the machine 1.

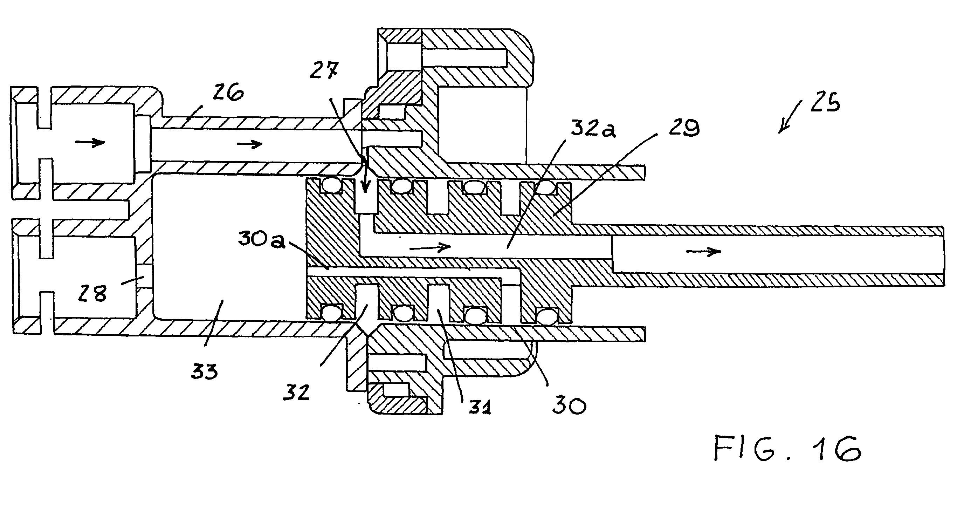

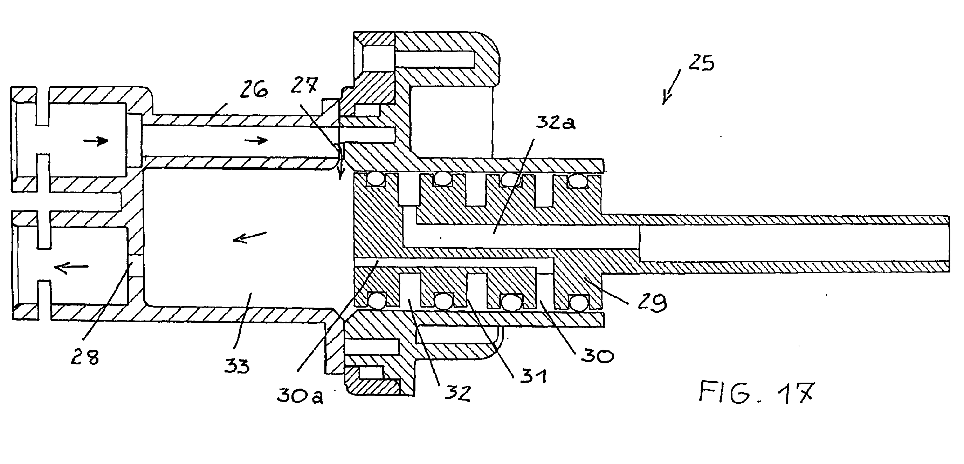

Two examples are shown in figures 16 and 17 to demonstrate how the boiler (not shown) feeds the tap 25 with steam.

Figure 16 shows the boiler pre-heating configuration where space 27 communicates with chamber 32 which in turn communicates with a duct that opens outside the tap; the boiler supply pump is switched off while the boiler resistors/elements collaborate with a temperature sensor to control the temperature in the boiler to produce steam.

In this configuration the forming of any possible pressure in the boiler is prevented during the pre-heating stage because the steam is discharged into an expansion chamber.

However figure 17, represents the configuration where steam is used.

In this configuration, space 27 communicates with the variable volume chamber 33 because the piston 29 is positioned at the maximum distance from the crown of the hollow body 26.

So the steam crosses space 27 and enters chamber 33 and is sent for use through space 28.

In this configuration the boiler pump and resistors/elements are activated to send water into the boiler (which is set at the temperature attained during the pre-heating stage), the water turns to steam, and the steam is supplied to the user.

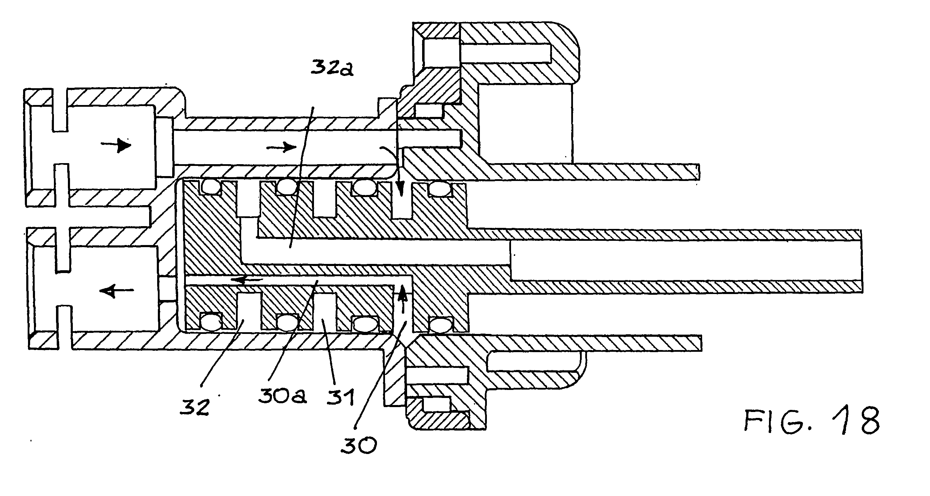

Figure 18 show the configuration in which tap 25 supplies the water to machine 1.

In this case space 27 communicates with chamber 30, which in turn is connected to a duct that opens onto the crown of piston 29.

Therefore the water crosses the duct and is sent for use through space 28.

In this configuration the boiler pump and resistors/elements are activated to send the water into the boiler (which was brought under thermostat control in a transitory stage to the suitable temperature to produce hot water); the water is then sent to the user.

When the tap supplies water to the fluid supply device 3, the coffee beverage can be produced.

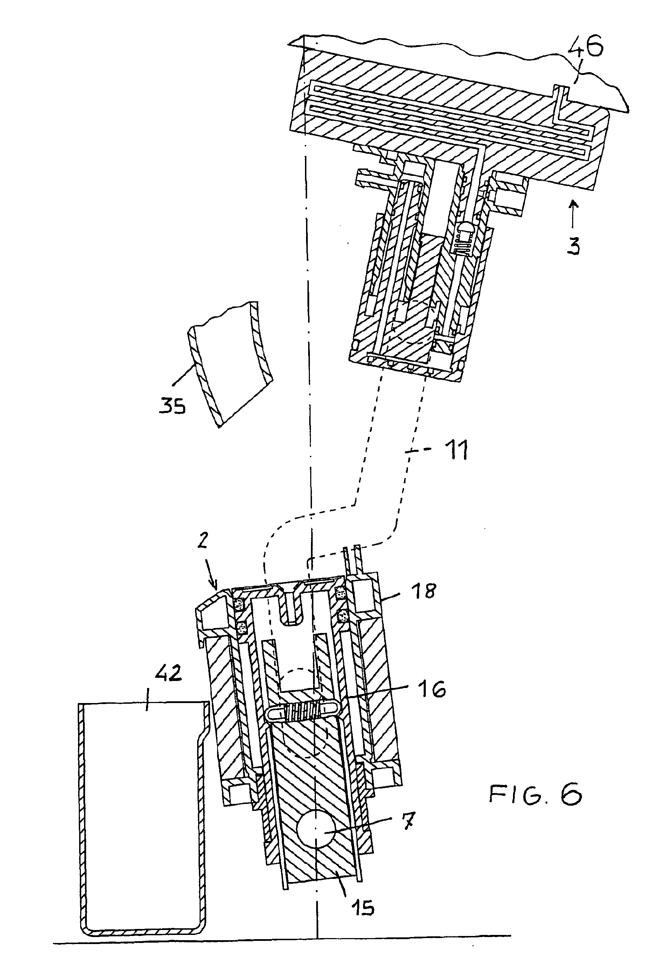

Figure 6 schematically shows the machine in idle position.

When the command is sent to produce a coffee beverage, the motion device 2a motor 13 activates the rotation of screw 12, and aided by the nut screw, it causes the translation of slide 9 along the same screw 12, and the rotation of the container unit 2 around pin 7.

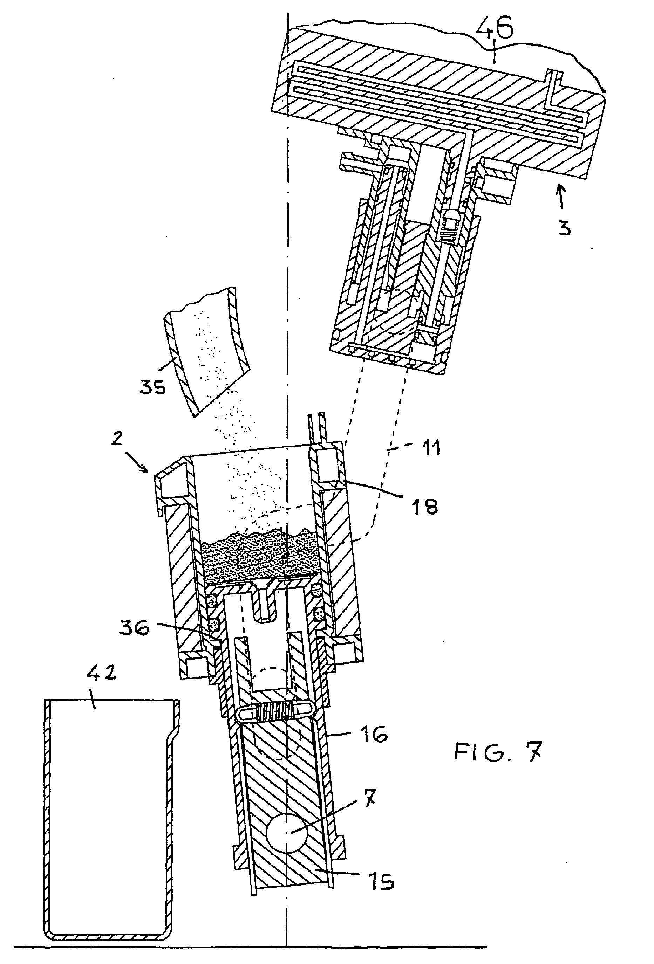

Figure 7 shows a stage in which element 18 of the container device 2 is extended (to its maximum length because its abutments 36 are in contact with the corresponding abutments of element 16) to form a space to contain the coffee powder.

A coffee powder dosing device, indicated schematically with reference numeral 35, inserts a pre-established quantity of coffee powder inside this space.

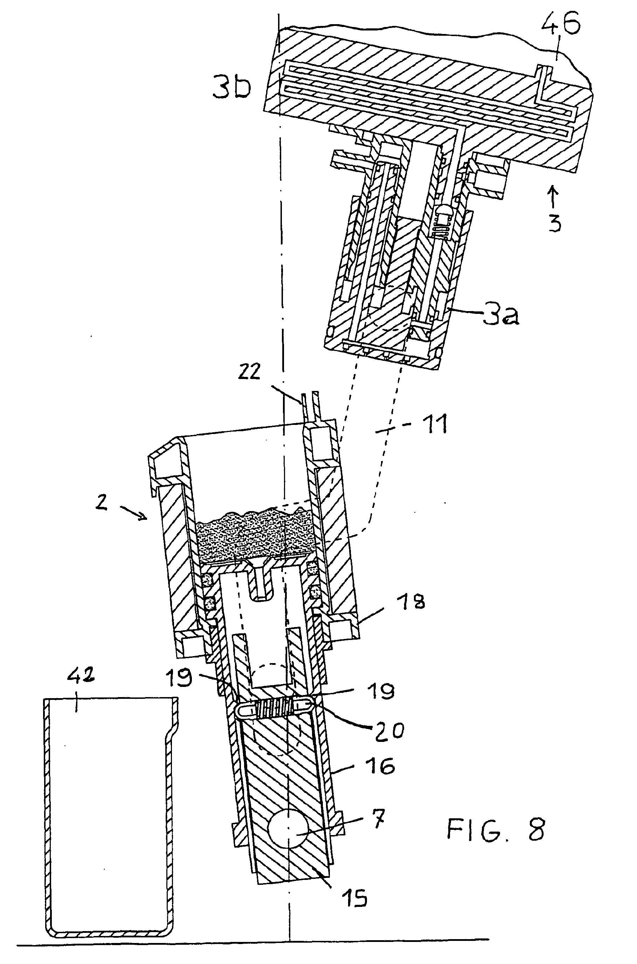

At this point, because of the gradual extension, the elastic abutments 20 move past the abutments 19 of element 16 (as shown in figure 8) and element 16 begins extension until a portion of the fluid container device 3 is inserted into element 18 forming the infusion chamber inside which the coffee powder is compressed (as shown in figure 9).

Element 18 presses on a lower portion 3a of device 3 and triggers a microswitch 37 that arrests the motion and provides the command for water supply into the infusion chamber, aided by abutment 38.

As is shown in particular in figures 8 and 9, before the container device 2 is connected to the supply container 3 (and in particular to the lower portion 3a) portion 3a is in a position at a certain distance from upper portion 3b of device 3.

When the container device 2 is connected to the supply device 3 it presses the lower portion 3a towards the upper portion 3b (as shown in figure 9) approaching them and activating microswitch 37.

Microswitch 37 commands the water supply to the infusion chamber and the production of the coffee beverage which is supplied to the user through valve 40 positioned on the space on element 16.

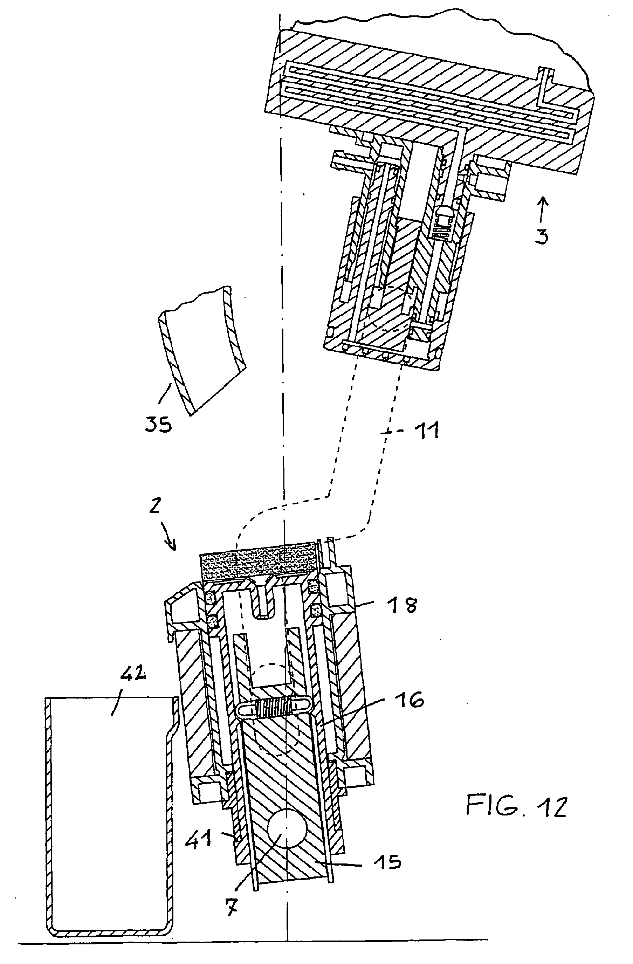

Following this, the coffee powder container device returns to idle configuration, first sending element 16 back onto element 15 and maintaining element 18 extended (until the abutments 20 are aligned with abutments 19, but have not yet passed them); element 18 returns onto element 16 bringing its abutments 41 onto the corresponding abutments of element 16, and in this manner causing the elastic abutments 20 to pass over the abutments 19 and to move further on (figure 12).

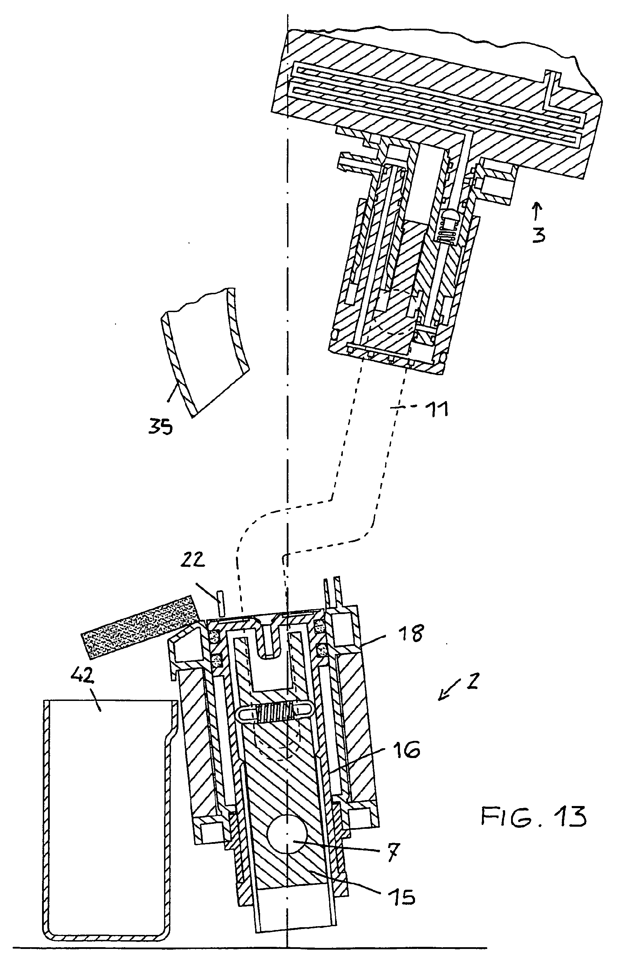

At this point, as shown in figure 13, the expulsion means 22, for example composed of an expelling lever, expel the waste coffee powder in the form of a single compressed tablet.

The coffee powder tablets are collected in a practical manner in a container 42.

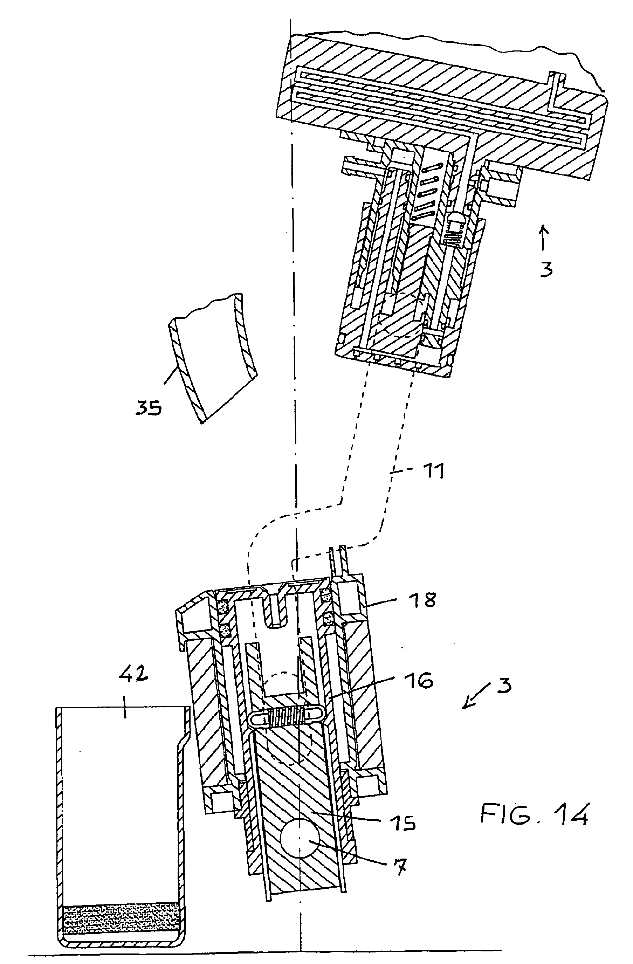

Last of all, the coffee powder container device is then partially extended returning to idle position with the abutments 20 opposite but above abutments 19 (as shown in figure 14).

In a particularly advantageous embodiment, machine 1 comprises safety means adapted to interrupt machine function in the case of any faulty conditions, especially in the connection between the third tubular element 18 and the lower portion 3a of the fluid supply device 3.

In particular, the safety means comprise a position detector (not shown) adapted to detect the position of the third telescopic element 18 connected to an electronic control processor.

In the case of faulty machine function due to incorrect alignment between element 18 and portion 3a of device 3, for example, or the presence of coffee powder in the mechanical parts, or similar conditions, the electronic processor prevents the triggering of the microswitch 37 that commands the water supply to the infusion chamber until element 18 has been replaced in its correct position.

With this system, the microswitch 37 cannot be triggered until the connection between element 18 and portion 3a of device 3 is not performed correctly (with element 13 at least in a position of a certain quota and device 3 that can activate the microswitch 37.)

Moreover, after a certain time lapse following the connection between element 18 and portion 3a, the electronic processor will cut off the action of motion mechanism 2a.

In this way, if the microswitch or some other component is damaged, this system will prevent any further damage to the machine 1.

In addition, advantageously, acting together with the electronic processor, the detector is adapted to command the arrest of element 18 in a pre-established position in relation to the dosing device 35.

When it is necessary to remove the coffee powder container device 2 from machine 1, first the hook-up couplings 8 must be released from their seats on the slide, and element 18 must be slid off pin 7.

This way, the coffee powder container device can be washed very easily because it does not involve moving the whole machine, and all parts are easily accessible, above all the filter.

In particular, in the example shown in the appended figures, boiler 46 is located above the supply device 3a.

Moreover, above the boiler 46, machine 1 is provided with a metal plate (preferably aluminium) adapted to absorb the dispersed heat from the boiler so that it remains hot and acts as a support for keeping cups warm.

It has been demonstrated how the machine for producing coffee beverages according to the present invention results as particularly advantageous in that it can be washed very easily without risk of damage to the machine and without the need to handle heavy and cumbersome components.

The machine for producing coffee beverages conceived in this manner may be subject to numerous modifications and variants, all of which remain within the context of the present invention; moreover, all components can be replaced with elements that are technically equivalent.

## Claims

1. Machine (1) for producing a coffee beverage (3b) comprising a coffee powder container device (2) and a fluid supply device (3) to produce a coffee beverage, said devices (2) and (3) being reciprocally mobile, so that when connected together they form an infusion chamber (4) for said coffee powder, **characterised by** the fact that said container device (2) can be removed from the machine (1), said container device (2) being connected to a moving mechanism adapted to displace said container device (2) from one position at a certain distance from said supply device (3) to a position adherent to said supply device (3), said container device (2) presenting first (5) and second (6) means of connection to said moving mechanism, said first means (5) of connection comprising at least one rotating pin (7) and said second means (6) of connection comprising hook-up couplings (3) connected to a slide (9) on said moving mechanism, mobile in relation to said pin (7), said slide (9) operating a tractive action on said container device (2) to bring the latter in said position adherent to said supply device (3) so that the lower portion (3a) of said supply device (3) is pressed to move towards the upper portion (3b) of said supply device (3) when the said supply device (3) is connected to said container device (2) or viceversa is distanced from said upper portion (3b) when the said supply device (3) is not connected to said container device (2).

2. Machine (1) according to one the previous claim **characterised in that** said rotating pin (7) is fixed and positioned lower than said slide (9).

3. Machine (1) according to one or more of the previous claims **characterised in that** said slide (9) is connected by a sliding motion to a guide (11) that commands at least the angular movement of said container device (2) around said pin (7).

4. Machine (1) according to one or more of the previous claims **characterised in that** said container device (2) comprises at least three telescopic elements (15,16,18) connected to each other by means of a sliding action, a first element (15) being set on said rotating pin (7), a second element (16) being connected in a sliding manner to said first element (15), and a third element (18) being connected in a sliding manner to said second element (16) and being adapted to house at least one portion of said supply device (3) to form said infusion chamber (4).

5. Machine (1) according to one or more of the previous claims **characterised in that** said second element (16) presents first abutments (19) adapted to collaborate with second elastic abutments (20) of said first element (15), and during the extension of said container device (2), said first (19) and second (20) abutments being adapted to command the translation, firstly of said third element (18) in relation to said first (15) and second element (16), and during the retraction of said container device (2), the translation firstly of said second (16) and third (18) element in relation to said first element (15), and then the translation of said third element (18) in relation to said second element (16).

6. Machine (1) according to one or more of the previous claims **characterised in that** it comprises means of expulsion (22) for the waste coffee powder from said container device (2).

7. Machine (1) according to one or more of the previous claims **characterised in that** it comprises at least one blocking element adapted to maintain all the components united in said coffee powder container device (2) when said device is removed from the machine.

8. Machine (1) according to one or more of the previous claims **characterised in that** said blocking element comprises a lever (51) hinged to said first telescopic element (15), said lever (51) presenting a protruding portion (52) inserted inside a tubular portion (53) adapted to house said pin (7), and moreover, presenting an end (54) bent at right-angles for insertion into aligned holes (55) in said second (16) and third (18) telescopic elements to prevent these elements from extending when said device (2) is removed from said machine (1).

9. Machine (1) according to one or more of the previous claims **characterised in that** it comprises safety means adapted to interrupt machine function in the case of faulty conditions, in particular in the connection between the third tubular element (18) and the lower portion of said fluid supply device (3).

10. Machine (1) according to one or more of the previous claims **characterised in that** said safety means comprise a position detector adapted to read the position of said third telescopic element (18) connected to an electronic control processor adapted to prevent the triggering of a microswitch that commands the water supply to the infusion chamber (4) until said third telescopic element (18) is set in its correct position.

11. Machine (1) according to one or more of the previous claims **characterised in that** following a certain time lapse after the connection between said third telescopic element (18) and said supply device (3), said electronic control processor interrupts the function of said moving mechanism.

12. Machine (1) according to one or more of the previous claims **characterised in that** hook-up teeth (101) are foreseen attached through a spring (102) to unite said container device (2) with said machine (1), these teeth (101) being able to be attached to and released from their respective holes (105) through a reciprocal inward and outward motion.

13. Machine (1) according to one or more of the previous claims **characterised in that** said hook-up teeth (101) are enlarged at a certain point to prevent micro-switch (108) activation of machine function in the case of partial or incorrect connection between said container device (2) and said machine (1).

14. Machine (1) according to one or more of the previous claims **characterised in that** it comprises an interception tap (25) for fluid or water on exit from the machine in the form of a hollow body having at least a first (27) and second (28) communicating space with the exterior and equipped with a piston (29) connected in sliding mode internally, forming together with said body (26) at least four chambers (30, 31, 32, 33) inside which steam or liquid can be passed alternatively.

15. Machine (1) according to the previous claim **characterised in that** when turned to one of its configurations, said tap (25) is adapted to activate or deactivate one or more microswitches that control the switch-on or switch-off of a water supply pump to the boiler and/or the switch-on or switch-off of the electric resistors /elements in the boiler.

16. Machine (1) according to one or more of the claims 14 and following claims **characterised in that** three chambers (30,31,32) of said tap (25) are formed by grooves in said piston (29) and a fourth chamber (33) presents a variable volume, and is formed between the crown of said hollow body (26) and the crown of said piston (29).

17. Machine (1) according to one or more of the claims 14 and following claims **characterised in that** a first chamber (30) of said four chambers is connected to a duct (30a) that opens onto the crown of said piston (29), a second chamber (31) is closed, a third chamber (32) is connected to a duct (32a) that opens onto the exterior of said tap (25), and said fourth chamber (33) is connected to a supply space (28) for water or steam on exit from the machine.

18. Machine (1) according to one or more of the claims 14 and following claims **characterised in that** said first space (27) is realised on a side portion of said body (26), and said second space (28) is realised on said crown of said hollow body (26).

19. Machine (1) according to one or more of the previous claims, **characterised in that** said fluid supply device (3) is connected to said heated boiler so that the heat dispersed by said boiler heats said fluid supply device (3).

20. Machine (1) according to one or more of the previous claims **characterised in that** the boiler and the supply device (3) are in contact with each other and the heat is transmitted by conduction to guarantee appropriate heating of said supply device (3).

21. Machine (1) according to claim 20 **characterised in that** at least one portion of a container device (2) is connected to said supply device (3) during the periods when the machine is idle, so that said container device (2) is also heated by said boiler.

22. Machine (1) according to one or more of the claims 20 and 21 **characterised in that** said container device (2) is automatically connected to said supply device (3) after a pre-established time lapse following the preparation of the last previous coffee beverage.

## Patentansprüche

1. Maschine (1) zur Herstellung eines Kaffeegetränkes (3b), welche eine Behältervorrichtung (2) für Kaffeepulver und eine Liefervorrichtung (3) für Flüssigkeit umfasst, um ein Kaffeegetränk herzustellen, wobei die besagten Vorrichtungen (2) und (3) wechselseitig beweglich sind, so dass sie, wenn sie aneinander befestigt werden, eine Brühkammer (4) für das besagte Kaffeepulver bilden, **dadurch gekennzeichnet, dass** die besagte Behältervorrichtung (2) aus der Maschine (1) entnommen werden kann, dabei ist die besagte Behältervorrichtung (2) mit einem Bewegungsmechanismus verbunden, welcher dafür geeignet ist, die besagte Behältervorrichtung (2) von einer Position in einer bestimmten Entfernung von der besagten Liefervorrichtung (3) in eine an die besagte Liefervorrichtung (3)anhaftende Position zu verstellen, wobei die besagte Behältervorrichtung (2) ein erstes (5) und ein zweites (6) Verbindungselement zum besagten Bewegungsmechanismus aufweist, dabei umfasst das besagte erste Verbindungselement (5) mindestens einen rotierenden Stift (7), und das besagte zweite Verbindungselement (6) umfasst festhakende Verbindungen (8), welche mit einer Gleitvorrichtung (9) auf dem besagten Bewegungsmechanismus befestigt sind, und welche im Verhältnis zum besagten Stift (7) beweglich sind, wobei die besagte Gleitvorrichtung (9) eine Zugkraft auf die besagte Behältervorrichtung (2) ausübt, um die letztere in die besagte Position, in der sie an der besagten Liefervorrichtung (3) anhaftet, zu bringen, so dass der untere Abschnitt (3a) der besagten Liefervorrichtung (3) gedrückt wird, um sich auf den oberen Abschnitt (3b) der besagten Liefervorrichtung (3) zu bewegen, wenn die besagte Liefervorrichtung (3) mit der besagten Behältervorrichtung (2) verbunden ist; oder umgekehrt ist sie von dem besagten oberen Abschnitt (3b) entfernt, wenn die besagte Liefervorrichtung (3) nicht mit der besagten Behältervorrichtung (2) verbunden ist.

2. Maschine (1) nach vorhergehendem Anspruch, **dadurch gekennzeichnet, dass** der besagte sich drehende Stift (7) feststeht und niedriger als die besagte Gleitvorrichtung (9) positioniert ist.

3. Maschine (1) nach einem oder mehreren der vorhergehenden Ansprüche, **dadurch gekennzeichnet, dass** die besagte Gleitvorrichtung (9) mittels einer Gleitbewegung mit einer Führung (11) verbunden ist, welche mindestens eine Winkelbewegung der besagten Behältervorrichtung (2) um den Stift (7) anordnet.

4. Maschine (1) nach einem oder mehreren der vorhergehenden Ansprüche, **dadurch gekennzeichnet, dass** die besagte Behältervorrichtung (2) mindestens drei teleskopische Elemente (15, 16, 18) umfasst, die untereinander durch eine Gleitbewegung verbunden sind, wobei ein erstes Element (15) auf den besagten sich drehenden Stift (7) aufgesetzt wird und eine zweites Element (16) auf gleitende Weise mit dem besagten ersten Element (15) verbunden wird, und wobei ein drittes Element (18) auf gleitende Weise mit dem besagten zweiten Element (16) verbunden und dafür geeignet ist, mindestens einen Abschnitt der besagten Liefervorrichtung (3) aufzunehmen, um die besagte Brühkammer (4) zu bilden.

5. Maschine (1) nach einem oder mehreren der vorhergehenden Ansprüche, **dadurch gekennzeichnet, dass** das besagte zweite Element (16) erste Widerlager (19) aufweist, welche dafür geeignet sind, mit zweiten elastischen Widerlagern (20) des besagten ersten Elements (15) zusammen zu arbeiten, und während der Ausdehnung der besagten Behältervorrichtung (2) das besagte erste (19) und zweite (20) Widerlager dafür geeignet sind, die Übertragung anzuordnen, zuerst die des besagten dritten Elementes (18) im Verhältnis zum besagten ersten (15) und zweiten Element (16); und während des Einzugs der besagten Behältervorrichtung (2) zuerst die Übertragung des besagten zweiten (16) und dritten (18) Elementes im Verhältnis zum besagten ersten Element (15), sowie dann die Übertragung des besagten dritten Elementes (18) im Verhältnis zum besagten zweiten Element (16).

6. Maschine (1) nach einem oder mehreren der vorhergehenden Ansprüche, **dadurch gekennzeichnet, dass** sie Mittel zum Entfernen (22) von benutztem Kaffeepulver aus der besagten Behältervorrichtung (2) umfasst.

7. Maschine (1) nach einem oder mehreren der vorhergehenden Ansprüche, **dadurch gekennzeichnet, dass** sie mindestens ein Blockierelement umfasst, welches dafür geeignet ist, alle Komponenten in der besagten Behältervorrichtung (2) für Kaffeepulver zusammen zu halten, wenn die besagte Vorrichtung aus der Maschine entnommen wird.

8. Maschine (1) nach einem oder mehreren der vorhergehenden Ansprüche, **dadurch gekennzeichnet, dass** das besagte Blockierelement einen Hebel (51) umfasst, der an dem ersten teleskopischen Element (15) befestigt ist, wobei der besagte Hebel (51) einen vorspringenden Abschnitt (52) aufweist, der in einen röhrenförmigen Abschnitt (53) eingelassen ist, um den besagten Stift (7) einzuführen; und außerdem ein rechtwinklig gebogenes Endstück (54) aufweist, um es in ausgerichtete Öffnungen (55) des besagten ersten (16) und dritten (18) teleskopischen Elementes einzuführen, um diese Elemente an der Ausdehnung zu hindern, wenn die besagte Vorrichtung (2) aus der besagten Maschine (1) entnommen wird.

9. Maschine (1) nach einem oder mehreren der vorhergehenden Ansprüche, **dadurch gekennzeichnet, dass** sie über Sicherheitsmittel verfügt, die dafür geeignet sind, die maschinellen Funktionen im Fall von fehlerhaften Konditionen zu unterbrechen, insbesondere bei der Verbindung zwischen dem dritten röhrenförmigen Element (18) und dem unteren Abschnitt der besagten Liefervorrichtung (3) für Flüssigkeiten.

10. Maschine (1) nach einem oder mehreren der vorhergehenden Ansprüche, **dadurch gekennzeichnet, dass** die besagten Sicherheitsmittel einen Positionsdetektor umfassen, der dafür geeignet ist, die Position des besagten dritten teleskopischen Elementes (18) anzuzeigen, welches mit einem elektronischen Kontrollprozessor verbunden ist, der dafür geeignet ist, das Starten eines Mikroschalters, welcher die Wasserlieferung zur Brühkammer (4) anordnet, zu verhindern, bis das besagte dritte teleskopische Element (18) in die korrekte Position gebracht wird.

11. Maschine (1) nach einem oder mehreren der vorhergehenden Ansprüche, **dadurch gekennzeichnet, dass**, wenn eine gewisse Zeit nach der Verbindung zwischen dem besagten dritten teleskopischen Element (18) und der besagten Liefervorrichtung (3) verstrichen ist, der besagte elektronische Kontrollprozessor die Funktion des besagten Bewegungsmechanismus unterbricht.

12. Maschine (1) nach einem oder mehreren der vorhergehenden Ansprüche, **dadurch gekennzeichnet, dass** festhakende Zähne (101) vorgesehen sind, die durch eine Feder (102) verbunden sind, um die besagte Behältervorrichtung (2) mit der besagten Maschine (1) zu vereinigen, wobei diese Zähne (101) in der Lage sind, an ihren entsprechenden Öffnungen (105) mittels einer wechselseitigen einwärts oder auswärts gerichteten Bewegung befestigt oder aus ihnen entfernt zu werden.

13. Maschine (1) nach einem oder mehreren der vorhergehenden Ansprüche, **dadurch gekennzeichnet, dass** die besagten festhakenden Zähne (101) an einem gewissen Punkt verbreitert sind, um die Betätigung des Mikroschalters (108) für die maschinellen Funktionen für den Fall der teilweisen oder unkorrekten Verbindung zwischen der besagten Behältervorrichtung (2) und der besagten Maschine (1) zu verhindern.

14. Maschine (1) nach einem oder mehreren der vorhergehenden Ansprüche, **dadurch gekennzeichnet, dass** sie einen Abfanghahn (25) für Flüssigkeiten oder Wasser am Ausgang der Maschine in der Form eines Hohlkörpers umfasst, welcher mindestens einen ersten (27) und zweiten (28) mit dem Äußeren verbundenen Zwischenraum besitzt und mit einem Kolben (29) ausgerüstet ist, der im Inneren gleitend befestigt wird, wobei sie mit dem besagten Körper (26) mindestens vier Kammern (30, 31, 32, 33) bildet, innerhalb derer Dampf oder Flüssigkeit wahlweise fließen können.

15. Maschine (1) nach vorhergehendem Anspruch, **dadurch gekennzeichnet, dass**, wenn auf eine seiner Formen zurück gegriffen wird, der besagte Hahn (25) dafür geeignet ist, einen oder mehrere Mikroschalter zu aktivieren oder zu deaktivieren, welche das Anschalten oder Ausschalten der Wasserlieferpumpe zum Boiler und/oder das Anschalten oder Ausschalten der elektrischen Widerstände/Elemente im Boiler kontrollieren.

16. Maschine (1) nach einem oder mehreren der Ansprüche 14 und folgende, **dadurch gekennzeichnet, dass** drei Kammern (30, 31, 32) des besagten Hahns (25) durch Rillen im besagten Kolben (29) gebildet werden, sowie eine vierte Kammer (33) ein veränderbares Volumen aufweist und zwischen der Kuppel des besagten Hohlkörpers (26) und der Kuppel des besagten Kolbens (29) gebildet wird.

17. Maschine (1) nach einem oder mehreren der Ansprüche 14 und folgende, **dadurch gekennzeichnet, dass** eine erste Kammer (30) der besagten vier Kammern mit einem Kanal (30a) verbunden ist, der sich über der Kuppel des besagten Kolbens (29) öffnet, wobei eine zweite Kammer (31) geschlossen ist, eine dritte Kammer (32) ist mit einem Kanal (32a) verbunden, der sich zur Außenseite des besagten Hahns (25) öffnet, und die besagte vierte Kammer (33) ist mit einem Lieferraum (28) für Wasser oder Dampf am Ausgang der Maschine verbunden.

18. Maschine (1) nach einem oder mehreren der Ansprüche 14 und folgende, **dadurch gekennzeichnet, dass** der erste Zwischenraum (27) an einem Seitenabschnitt des besagten Körpers (26) verwirklicht wird, und der zweite Zwischenraum (28) auf der besagten Kuppel des besagten Hohlkörpers (26) verwirklicht wird.

19. Maschine (1) nach einem oder mehreren der vorhergehenden Ansprüche, **dadurch gekennzeichnet, dass** die besagte Liefervorrichtung (3) für Flüssigkeiten am besagten Heizboiler befestigt ist, so dass die durch den besagten Boiler verteilte Hitze die besagte Liefervorrichtung (3) für Flüssigkeiten erhitzt.

20. Maschine (1) nach einem oder mehreren der vorhergehenden Ansprüche, **dadurch gekennzeichnet, dass** der Boiler und die Liefervorrichtung (3) miteinander in Kontakt stehen, und dass die Hitze durch Leitung übertragen wird, um eine angemessene Erwärmung der besagten Liefervorrichtung (3) zu garantieren.

21. Maschine (1) nach Anspruch 20, **dadurch gekennzeichnet, dass** mindestens ein Abschnitt einer Behältervorrichtung (2), während des Zeitraums, wenn die Maschine nicht in Betrieb ist, an der besagten Liefervorrichtung (3) befestigt ist, so dass die besagte Behältervorrichtung (2) ebenfalls durch den besagten Boiler erhitzt wird.

22. Maschine (1) nach einem oder mehreren der Ansprüche 20 und 21, **dadurch gekennzeichnet, dass** die besagte Behältervorrichtung (2) nach einer vorher festgelegten Zeitspanne, die der Zubereitung des letzten Kaffeegetränkes folgt, automatisch an der besagten Liefervorrichtung (3) befestigt wird.

## Revendications

1. Machine (1) pour la production d'une boisson au café comportant un dispositif conteneur (2) pour la poudre de café et un dispositif d'alimentation du liquide (3) pour produire une boisson au café, lesdits dispositifs (2) et (3) étant réciproquement mobiles, de sorte que, aussitôt qu'ils sont branchés l'un à l'autre, ils forment une chambre d'infusion (4) pour ladite poudre de café, **caractérisée en ce que** ledit dispositif conteneur (2) peut être enlevé de la machine (1), ledit dispositif conteneur (2) étant branché à un mécanisme mobile adapté pour déplacer ledit dispositif conteneur (2) d'une position située à une certaine distance dudit dispositif d'alimentation (3) à une position adhérant audit dispositif d'alimentation (3), ledit dispositif conteneur (2) présentant des premiers (5) e seconds (6) moyens de branchement audit mécanisme mobile, lesdits premiers moyens (5) de branchement comportant au moins un pivot de rotation (7) et lesdits seconds moyens (6) de branchement comportant accouplements de branchement (8) branchés à un coulisseau (9) sur ledit mécanisme mobile, bougeant par rapport audit pivot (7), ledit coulisseau (9) exerçant une action de traction sur ledit dispositif conteneur (2) pour entraîner ce dernier dans ladite position adhérant audit dispositif d'alimentation (3), de sorte que la portion inférieure (3a) dudit dispositif d'alimentation (3) soit contrainte de bouger vers la portion supérieure (3b) dudit dispositif d'alimentation (3) aussitôt que ledit dispositif d'alimentation (3) est branché audit dispositif conteneur (2) ou, vice-versa, elle est écartée de ladite position supérieure (3b) aussitôt que ledit dispositif d'alimentation (3) n'est pas branché audit dispositif conteneur (2).

2. Machine (1) selon la revendication précédente **caractérisée en ce que** ledit pivot de rotation (7) est fixé et positionné plus en bas que ledit coulisseau (9).

3. Machine (1) selon l'une ou plusieurs des revendications précédentes **caractérisée en ce que** ledit coulisseau (9) est branché par un mouvement coulissant à un guide (11) qui commande au moins le mouvement angulaire dudit dispositif conteneur (2) autour dudit pivot (7).

4. Machine (1) selon l'une ou plusieurs des revendications précédentes **caractérisée en ce que** ledit dispositif conteneur (2) comporte au moins trois éléments télescopiques (15, 16, 18) branchés les uns aux autres moyennant une action coulissante, un premier élément (15) étant positionné sur ledit pivot de rotation (7), un second élément (16) étant branché d'une manière coulissante audit premier élément (15), et un troisième élément (18) étant branché d'une manière coulissante audit second élément (16) et étant adapté pour loger au moins une portion dudit dispositif d'alimentation (3) pour former ladite chambre d'infusion (4).

5. Machine (1) selon l'une ou plusieurs des revendications précédentes **caractérisée en ce que** ledit second élément (16) présente des premières butées (19) adaptées pour collaborer avec de secondes butées élastiques (20) dudit premier élément (15), et pendant l'extension dudit dispositif conteneur (2) lesdites premières (19) et secondes butées (20) étant adaptées pour commander la translation, premièrement dudit troisième élément (18) par rapport audit premier (15) et second élément (16), et pendant le retour en arrière dudit dispositif conteneur (2), la translation premièrement dudit second (16) et troisième (18) élément par rapport audit premier élément (15), et ensuite la translation dudit troisième élément (18) par rapport audit second élément (16).

6. Machine (1) selon l'une ou plusieurs des revendications précédentes **caractérisée en ce qu'**elle comporte des moyens d'expulsion (22) pour les rebuts de poudre de café dudit dispositif conteneur (2).

7. Machine (1) selon l'une ou plusieurs de revendications précédentes, **caractérisée en ce qu'**elle comporte au moins un élément de blocage adapté pour maintenir unis tous les composants dans ledit dispositif conteneur (2) de poudre de café, lorsque ledit dispositif est enlevé de la machine.

8. Machine (1) selon l'une ou plusieurs des revendications précédentes, **caractérisée en ce que** ledit élément de blocage comporte un levier (51) encharné audit premier élément télescopique (15), ledit levier (51) présentant une portion débordante (52) insérée à l'intérieur d'une portion tubulaire (53) adaptée pour loger ledit pivot (7) et, en outre, présentant une extrémité (54) inclinée à angles droits pour l'insérer dans des trous alignés (55) dans lesdits second (16) et troisième (18) éléments télescopiques en vue d'empêcher ces éléments de s'étendre aussitôt que ledit dispositif (2) est enlevé de ladite machine (1).

9. Machine (1) selon l'une ou plusieurs des revendications précédentes, **caractérisée en ce qu'**elle comporte des moyens de sécurité adaptés pour interrompre le fonctionnement de la machine en cas de conditions défectueuses, notamment pour ce qui est du raccordement entre le troisième élément tubulaire (18) et la portion inférieure dudit dispositif d'alimentation du liquide (3).

10. Machine (1) selon l'une ou plusieurs des revendications précédentes **caractérisée en ce que** lesdits moyens de sécurité comportent un détecteur de position adapté pour lire la position dudit troisième élément télescopique (18) branché à un processeur de commande électronique adapté pour empêcher l'enclenchement d'un micro-interrupteur qui commande l'alimentation en eau vers la chambre d'infusion (4) tant que ledit troisième élément télescopique (18) est posé dans sa position correcte.

11. Machine (1) selon l'une ou plusieurs des revendications précédentes, **caractérisée en ce que** suivant un certain lapse de temps après le branchement entre ledit troisième élément télescopique (18) et ledit dispositif d'alimentation (3), ledit processeur de commande électronique interrompt le fonctionnement dudit mécanisme mobile.

12. Machine (1) selon l'une ou plusieurs des revendications précédentes, **caractérisée en ce que** des dents d'accrochage (101) sont prévues attelées par le biais d'un ressort (102) pour joindre ledit dispositif conteneur (2) à ladite machine (1), ces dents (101) étant en mesure d'être attelées à et dégagées de leurs trous respectifs (105) par un mouvement réciproque vers l'intérieur et vers l'extérieur.

13. Machine (1) selon l'une ou plusieurs des revendications précédentes, **caractérisée en ce que** lesdites dents d'accrochage (101) sont élargies à un certain point pour empêcher l'enclenchement du micro-interrupteur (108) du fonctionnement de la machine en cas de branchement partiel ou incorrect entre ledit dispositif conteneur (2) et ladite machine (1).

14. Machine (1) selon l'une ou plusieurs des revendications précédentes **caractérisée en ce qu'**elle comporte une prise d'interception (25) pour le liquide ou l'eau sortant de la machine sous forme d'un corps creux ayant au moins un premier (27) et un second (28) espace de communication avec l'extérieur et équipé d'un piston (29) raccordé intérieurement d'une façon coulissante, formant avec ledit corps (26) au moins quatre chambres (30, 31, 32, 33) à l'intérieur desquelles de la vapeur ou du liquide peuvent être laissé passer alternativement.

15. Machine (1) selon la revendication précédente, **caractérisée en ce que**, aussitôt qu'elle est positionnée dans une de ses configurations, ladite prise (25) est adaptée à amorcer ou désamorcer un ou plusieurs micro-interrupteurs qui commandent l'amorçage ou le désamorçage d'une pompe d'alimentation à eau vers la chaudière et/ou le l'amorçage ou le désamorçage des résistances électriques / éléments dans la chaudière.

16. Machine (1) selon l'une ou plusieurs des revendications 14 et subséquentes **caractérisée en ce que** trois chambres (30, 31, 32) de ladite prise (25) sont formées par des rainures dans ledit piston (29) et qu'une quatrième chambre (33) présente un volume variable, et qu'elle est formée entre la couronne dudit corps creux (26) et la couronne dudit piston (29).

17. Machine (1) selon l'une ou plusieurs des revendications 14 et subséquentes, **caractérisée en ce qu'**une première chambre (30) desdites quatre chambres est raccordée à une conduite (30a) qui s'ouvre sur la couronne dudit piston (29), qu'une seconde chambre (31) est fermée, qu'une troisième chambre (32) est raccordée à une conduite (32a) qui s'ouvre sur l'extérieur de ladite prise (25), et que ladite quatrième chambre (33) est raccordée à un espace d'alimentation (28) pour l'eau ou la vapeur sortant de la machine.

18. Machine (1) selon l'une ou plusieurs des revendications 14 et subséquentes, **caractérisée en ce que** ledit premier espace (27) est réalisé sur une portion latérale dudit corps (26), et que ledit second espace (28) est réalisé sur ladite couronne dudit corps creux (26).

19. Machine (1) selon l'une ou plusieurs des revendications précédentes, **caractérisée en ce que** ledit dispositif d'alimentation du liquide (3) est branché à la dite chaudière échauffée de sorte que la chaleur dispersée par ladite chaudière échauffe ledit dispositif d'alimentation du fluide (3).

20. Machine (1) selon l'une ou plusieurs des revendications précédentes, **caractérisée en ce que** la chaudière et le dispositif d'alimentation (3) sont au contact l'une de l'autre et que la chaleur est transmise par conduction en vue d'assurer l'échauffement approprié dudit dispositif d'alimentation (3).

21. Machine (1) selon la revendication 20, **caractérisée en ce qu'**au moins une portion d'un dispositif conteneur (2) est branchée audit dispositif d'alimentation (3) pendant les périodes où la machine est inactive, de sorte que ledit dispositif conteneur (2) soit aussi échauffé par ladite chaudière.

22. Machine (1) selon l'une ou plusieurs des revendications 20 et 21, **caractérisée en ce que** ledit dispositif conteneur (2) est automatiquement branché audit dispositif d'alimentation (3) après un lapse de temps préétabli suite à la préparation de la dernière précédente boisson au café.
